(19) Europäisches Patentamt
European Patent Office
Office européen des brevets

(11) Publication number: **0 245 561**
**A2**

(12) # EUROPEAN PATENT APPLICATION

(21) Application number: **86309729.1**

(51) Int. Cl.⁴: **C09D 3/80**, C08F 265/00

(22) Date of filing: **12.12.86**

(30) Priority: **07.05.86 US 860591**

(43) Date of publication of application: **19.11.87 Bulletin 87/47**

(84) Designated Contracting States: **DE FR GB**

(71) Applicant: **THE STANDARD OIL COMPANY**
**200 Public Square, 36-F-3454**
**Cleveland Ohio 44114-2375(US)**

(72) Inventor: **Bartoszek-Loza, Rosemary**
**6570 Arbordale Avenue**
**Solon Ohio 44139(US)**
Inventor: **Butler, Richard J.**
**23951 Lakeshore Blvd. No. 1207**
**Euclid Ohio 44123(US)**

(74) Representative: **Smith, Sydney et al**
**Elkington and Fife High Holborn House 52/54**
**High Holborn**
**London WC1V 6SH(GB)**

(54) **Nitrile acrylate radiation curable coating compositions and the process of making the same.**

(57) Photocurable coating compositions comprising a polymer comprising a nitrile monomer and an acrylate monomer; a reactive diluent and a photoinitiator are useful as protective coatings. They may be applied to a substrate and cured. The coating compositions can be 100% solids nitrile acrylate coatings composition.

EP 0 245 561 A2

# NITRILE ACRYLATE RADIATION CURABLE COATING COMPOSITIONS AND THE PROCESS OF MAKING THE SAME

The present invention is directed generally to radiation curable nitrile acrylate coating compositions for use as protective coatings on various substrates such as metals, woods, plastics and the like. This invention relates to novel 100 percent solids, solvent borne nitrile acrylate radiation curable, in particular photocurable, coatings. In another aspect, the invention relates to the novel coating compositions and the process for curing the coating compositions, which coatings have excellent hardness, excellent adhesion, excellent appearance, excellent barrier properties and excellent corrosion resistance.

The desirability of forming photocurable coating compositions which can be developed without the need of conventional organic solvents has long been recognized. Organic solvents are costly, hazardous and need to be removed from the final coating, which requires considerable thermal energy. In accordance with this invention, it has now been discovered that nitrile acrylate photocured coating can be produced in a solventless system.

Nitrile coatings are known in the art for their barrier properties. Representative examples of nitrile coatings and their preparations are found in United States Patent No. 4,379,875 and 4,379,948. These patents teach nitrile latex coatings that are thermally cured at high temperatures requiring high thermal energy input. In view of the foregoing it would be highly desirably to cure nitrile coatings at room temperature using radiation. This approach is found in United States Serial No. 689,278.

There is limited solubility of high nitrile polymers in reactive diluents. Enhanced solubility is desirable for increasing the reactivity of nitrile polymers with reactive diluents. In accordance with this invention it was discovered that the synthesis of a nitrile acrylate polymer would enable the use of a wider range of reactive diluents while retaining the inherent barrier properties of the nitrile functionality.

Furthermore, photopolymerizable systems are generally deficient over thermal systems to produce good adhesion of coatings to substrates. The reason for poorer adhesion properties in photopolymerizable systems is that the time/temperature relationship is generally insufficient to create adequate adhesion forces resulting in shrinkage of the polymeric material on the substrate. It has now been found in accordance with the instant invention that a photocurable nitrile acrylate coating composition has excellent adhesion to various substrates and the problems of shrinkage have been alleviated due to the nitrile functionality.

It is an object of this invention to provide nitrile acrylate coating compositions in a 100 percent solids, solvent free system to avoid the use of solvents. It is another object of this invention to provide nitrile acrylate coatings that are radiation cured, in particular photocured, at ambient temperature. It is another object of this invention to produce photocured coatings which are corrosion resistant, hard and have strong adhesion.

These and other object, together with the advantages over known methods shall become apparent from the specification which follows and are accomplished by the invention as herein described and claimed.

## Summary of the Invention

This invention relates to a coating composition comprising a polymer comprising a nitrile monomer and an acrylate monomer; a reactive diluent and a photoinitiator. The novel coating compositions of the instant invention are radiation cured to a tack free coating. Further, the coatings have excellent corrosion resistance, excellent hardness and are highly adhesive to various substrates. The coating compositions are 100 percent solids thus avoiding solvent volatility and the need for solvent recovery.

The invention further includes a process to produce said nitrile acrylate coatings comprising;

1. preparing a polymer comprising a high nitrile monomer and an acrylate monomer,
2. forming a mixture of said polymer, a reactive diluent and a photoinitiator,
3. applying the mixture of the coating composition to a substrate, and
4. curing the coating by radiation to form a tack free coating.

The nitrile acrylate radiation curable coating compositions of the instant invention can be used for industrial protection of metals where properties such as adhesion, hardness and corrosion resistance are important. Major uses for the coatings would be in the automotive industry, oil industry, pulp industry and others. Further, the coatings may be used in other fields such as adhesives, sealants, electrical components and the like.

Detailed Description of the Invention

The radiation curable coating compositions of the instant invention are the reaction products of a polymer comprising a nitrile monomer and an acrylate monomer; a reactive diluent and a photoinitiator.

The coating composition of the instant invention contains a polymer synthesized from a nitrile monomer and an acrylate monomer. The coating composition generally contains from about 5 weight percent to about 60 weight percent, preferably from about 15 weight percent to about 50 weight percent and most preferably from about 25 weight percent to about 40 weight percent of the nitrile acrylate polymer. The nitrile acrylate polymer can be employed either alone or in combination.

The polymer can be prepared by any method known in the art. Preferably, the polymer is prepared by polymerization in an emulsion or solution of an olefinically unsaturated nitrile and an acrylate component copolymerizable therewith.

Preferred polymers useful in this invention are those prepared by the polymerization of 100 parts by weight of (A) from about 45 percent to about 90 percent by weight of at least one nitrile having the structure:

(I) $CH_2=C(R)CN$

wherein R is hydrogen, a lower alkyl group having from 1 to 6 carbon atoms or a halogen and (B) from about 10 percent to about 65 percent by weight of at least one ester having the structure:

(II) $CH_2=C(R_1)COOR_2$

where $R_1$ is hydrogen, an alkyl group having from 1 to 30 carbon atoms or a halogen, and $R_2$ is an alkyl group having from 1 to 30 carbon atoms.

Chain transfer agents can optionally be used in the polymerization of the nitrile acrylate polymer. Chain transfer agents can be used to control the molecular weight of the nitrile acrylate polymer. Chain transfer agents and the use thereof are generally well known in the art. Chain transfer agents can be employed either alone or in combination. Examples of typical chain transfer agents include but are not limited to methyl mercaptan, ethyl mercaptan, n-propyl mercaptan, isopropyl mercaptan, n-butyl mercaptan, t-butyl mercaptan, n-hexyl mercaptan, cyclohexyl mercaptan, n-octyl mercaptan, t-octyl mercaptan, t-nonyl mercaptan, n-dodecyl mercaptan, t-dodecyl mercaptan, tridecyl mercaptan and the like.

In the practice of this invention the nitrile monomer employed in the polymerization of the polymer can be employed either alone or in combination. The polymer composition contains from about 30 weight percent to about 99 weight percent preferably from about 45 weight percent to about 90 weight percent, and most preferably from about 60 weight percent to about 80 weight percent of the nitrile monomer in the polymer.

The nitrile monomer employed in the synthesis of the polymer include but are not limited to olefinically unsaturated nitrile having the structure:

(I) $CH_2=C(R)-CN$

wherein R is hydrogen, a lower alkyl group having from 1 to 6 carbon atoms or a halogen. Such compounds include but are not limited to acrylonitrile, alpha-chloroacrylonitrile, alpha-fluoroacrylonitrile, methacrylonitrile, ethacrylonitrile and the like. The preferred olefinically unsaturated nitriles useful in the present invention are acrylonitrile, methacrylonitrile and mixtures thereof.

The nitrile monomer does not require butadiene or styrene. The coating composition has good results whether or not these components are employed.

In the practice of this invention the acrylate monomer employed in the polymerization of the polymer can be employed either alone or in combination. The polymer composition contains from about 1 weight percent to about 70 weight percent, preferably from about 10 weight percent to about 55 weight percent and most preferably from about 20 weight percent to about 40 weight percent of the acrylate monomer in the polymer.

The acrylate monomers employed in the instant invention are monofunctional monomers.

The acrylate monomer copolymerizable with the nitrile monomer include but are not limited to one or more of the esters of olefinically unsaturated carboxylic acids, vinyl esters, vinyl ethers, vinyl ketones, alpha-olefins, vinyl aromatic monomers and the like.

The esters of olefinically unsaturated carboxylic acids include those having the structure:

(II) $CH_2=C(R_1)-COOR_2$

wherein $R_1$ is hydrogen, an alkyl group having from 1 to 30 carbon atoms, or a halogen and $R_2$ is an alkyl group having from 1 to 30 carbon atoms. Compounds of this type include but are not limited to methyl acrylate, ethyl acrylate, propyl acrylate, butyl acrylate, amyl acrylate, hexyl acrylate, methyl methacrylate,

ethyl methacrylate, propyl methacrylate, butyl methacrylate, amyl methacrylate, hexyl methacrylate, methyl alpha-chloroacrylate, ethyl alpha-chloroacrylate, hydroxy alkyl acrylate, hydroxy alkyl methacrylate and the like. Most preferred in the present invention are methyl acrylate, ethyl acrylate, methyl methacrylate, ethyl methacrylate, ethyl methacrylate, acrylic acid and methacrylic acid.

The alpha-olefins useful in the present invention are those having at least 4 and as many as 10 carbon atoms having the Structure (III)

(III) 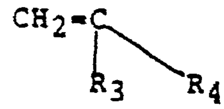

wherein $R_3$ and $R_4$ are alkyl groups having from 1 to 7 carbon atoms. Representative compounds include but are not limited to isobutylene, 2-methyl butene-1, 2-methyl pentene-1, 2-methyl hexene-1, 2-methyl heptene-1, 2-methyl octene-1, 2-ethyl butene-1, 2-propyl pentene-1 and the like. Most preferred is isobutylene.

The vinyl ethers include but are not limited to methyl vinyl ether, ethyl vinyl ether, propyl vinyl ether, butyl vinyl ether, methyl isopropenyl ether, ethyl isopropenyl ether and the like. Most preferred are methyl vinyl ether, ethyl vinyl ether, the propyl vinyl ether and the butyl vinyl ether.

The vinyl esters include but are not limited to vinyl acetate, vinyl propionate, the vinyl butyrate and the like. Most preferred vinyl acetate.

The vinyl aromatic monomers include but are not limited to styrene, alpha-methyl styrene, vinyl toluene, vinyl xylene, indene and the like. Most preferred are styrene and indene.

The second component of the coating composition of the present invention is a reactive diluent. The reactive diluent is any material which is compatible with the nitrile acrylate polymer component. Preferably the reactive diluent is also activated by exposure to radiation. During cure a radical induced polymerization of the reactive diluent with reactive diluent and/or nitrile acrylate polymer is triggered by exposure to radiation. Polymerization is triggered photochemically when light is used as the source of radiation causing formation of the coating matrix. The coating compositions are classified as 100 percent solids because the reactive diluent crosslinks and is incorporated into the coating matrix. Minor amounts of other diluent materials may optionally be used which may be volatile, which does not defeat the object of this invention, to provide a substantially 100 percent solids coating composition.

Reactive diluents are generally well known in the art. The reactive diluent can be employed either alone or in combination. The coating composition generally contains in percent of total weight, from about 95 percent to about 40 percent, preferably from about 85 percent to about 50 percent and most preferably from about 75 percent to about 60 percent of the reactive diluent.

Types of suitable reactive diluents include but are not limited to acrylates, olefinically unsaturated carboxylic acids and their anhydrides, vinyl esters, vinyl halides, vinyl cyanides, vinyl amides, vinyl amines, olefins and the like.

Acrylates useful as reactive diluents include but are not limited to mono, di, tri, tetra or penta (meth)-acrylates or their esters. Compounds of this type include alkyl acrylate, cycloalkyl acrylate, ethyl acrylate, methy cyclohexyl acrylate, diethyl glycol acrylate, glycidyltetrahydrofurfuryl, allyl acrylate, hydroxyalkyl acrylates and further include alkene glycol acrylate, polyalkanediol diacrylate, polyoxyalkylene glycol acrylate, trimethylpropane acrylate, pentaerythritol acrylate and cyanoalkyl acrylate, allyl (meth)acrylate, beta-carboxyethyl acrylate, 1,3-butylene glycol di(meth)acrylate, caprolactone acrylate, 1,4-butanediol diacrylate, cyanoethyl acrylate, cyclohexyl methacrylate, diallyl fumarate, dicyclopentenyl (meth)acrylate, diethylene glycol di(meth)acrylate, 2,3-dimethylpropane, 1,3-diacrylate (neopentyl glycol diacrylate), dipentaerythritol monohydroxypentaacrylate, 2-(2-ethoxyethoxy) ethyl acrylate, ethoxylate bisphenol A di(meth)-acrylate, 1,6-hexanediol di(meth)acrylate, n-hexyl methacrylate, ethylene glycol dimethacrylate, glyceryl propoxy triacrylate, glycidyl (meth)acrylate, isobornyl acrylate, 2-phenoxyethylacrylate, pentaerythritol tetra-(meth)acrylate, pentaerythritol triacrylate, poly(butanediol)diacrylate, polyethylene glycol di(meth)acrylate, tetraethylene glycol di(meth)acrylate, (tetraethylene) tetrahydrofurfuryl acrylate, thiodiethyleneglycol diacrylate, trimethoylpropane tri(meth)acrylate, trimethylene glycol dimethacrylate, trimethylolpropane triacrylate, tripropylene glycol diacrylate, zinc di(meth)acrylate and the like. Most preferred are ethyl acrylate, methyl cyclohexyl acrylate and diethyl glycol diacrylate.

The alpha, beta olefinically unsaturated carboxylic acids and anhydrides useful as reactive diluents include but are not limited to acrylic acid, methacrylic acid, alpha chloro cyanoacrylic acid, alpha bromo cyanoacrylic acid, maleic acid, maleic anhydride, alpha-chloro maleic acid, dichloromaleic anhydride, itaconic acid, scorbic acid and the like. Most preferred are acrylic acid and methacrylic acid.

The vinyl esters useful as reactive diluents include but are not limited to alkyl vinyl ethers, cycloalkyl vinyl ethers, aromatic vinyl ethers and the like. Most preferred are methylvinyl ether and ethylvinyl ether.

The vinyl halides useful as reactive diluents include but are not limited to vinylchloride, vinylbromide, vinylfluoride, vinylidene chloride, vinylidene bromide, vinylidene fluoride, dichloro-difluoroethylene, chlorotrifluoroethylene, trifluoroethylene, chloroprene and the like. Most preferred are vinylchloride and vinylidene chloride.

The vinyl cyanides useful as reactive diluents include but are not limited to acrylonitrile, methacrylonitrile, maleic dinitrile, fumaronitrile, vinyl cyanide and the like. Most preferred are acrylonitrile and methacrylonitrile.

The vinylamides useful as reactive diluents include but are not limited to acrylamide, N-methylacrylamide, N,N-dimethylacrylamide, N-t-butylacrylamide, N-dodecylacrylamide, N-phenylacrylamide, N-vinylacrylamide, N,N-methylenebisacrylamide, dimethylformamide, diethylformamide and the like. Most preferred are N,N-dimethylacrylamide, N,N-methylenebisacrylamide and N,N-dimethylacrylamide.

The vinyl amides useful as reactive diluents include but are not limited to N-vinylpiperidine and vinyl pyridine and the like. Most preferred are N-vinylpiperidine and vinyl pyridine.

The olefins useful as reactive diluents include but are not limited to ethylene, propylene, butylene, amylene, hexylene, heptene, octylene, 1,3-butadiene, isoprene, styrene, alpha-methylstyrene, and alpha-chlorostyrene and the like. Most preferred are styrene and alpha-methylstyrene.

Other exemplary reactive diluents are N-vinylpyrolidone, styrene, dimethylsulfoxide, N-methyl pyrrolidone, ethylene carbonate, acetonitrile, gamma-butyrolactone, dimethylsulphone and the like. The most preferred are N-vinylpyrrolidone, gamma-butyrolactone and styrene.

The third component of the coating composition of the present invention is the photoinitiator. During cure the photoinitiator absorbs actinic radiation, forming reactive intermediates that react further with the reactive diluent and nitrile acrylate polymer. A general discussion of chemical reaction initiators is available in Kirk-Othmer, Encyclopedia of Chemical Technology, Vol 13, pp. 355-373, "Initiators", John Wiley and Sons, 1978.

The photoinitiator can be employed either alone or in combination to affect the cure of the coating composition upon exposure to radiation. The coating composition generally contains, in percent of the total weight, from about 0.01 percent to about 10 percent by weight, preferably from about 0.1 percent to about 5 percent by weight and most preferably from about 0.5 percent to about 2 percent by weight of the photoinitiator.

The photoinitiators and the cure thereof are generally well known in the art. Examples of suitable photoinitiators include acetophenone derivatives, azo compounds, benzoin derivatives, amines and their derivatives, anthraquinone derivatives, dibenzyl ketones, benzophenone derivatives, benzoin alkyl ethers and the like. Particular non-limiting examples of the photoinitiators include benzophenone, benzil, benzoin ethyl ether, azobisisobutyronitrile and the like. Most preferred are benzophenone, ethyl diethanol amine and 2,2-dimethoxy-2-phenyl acetophenone.

It will be readily apparent to those skilled in the art that the coating composition of the instant invention may be further modified by the addition of plasticizers, stabilizers, pigments, dispersants, defoamers, surfactants, extenders, fillers, reinforcing agents and other film formers. The coating compositions of the instant invention may also optionally contain various flattening agents, surface active agents, thixotropic agents, UV light absorbers, flow control agents, viscosity agents, antioxidant agents and dyes. All these additives and the use thereof are well known in the art and do not require extensive discussion, it being understood that any compound possesing the ability to function in such a manner, i.e., as a flattening agent, surface active agent, UV light absorber and the like, can be used so long as they do not deleteriously affect the radiation curing of the coating composition and do not adversely affect the characteristics of the coating.

In the practice of this invention, the radiation curable coating compositions are first compounded by adding together the reactive diluents to form a homogeneous mixture, to which is then added the nitrile acrylate polymer, forming a mixture. To this mixture is added the photoinitiator, preferably in the dark, with stirring. Optionally, at any step prior to the radiation cure in the process, any of the aforementioned additives may be stirred into the mixture. The various components are thoroughly mixed so as to form a generally homogeneous coating composition.

A thin, relatively uniform film of coating composition is applied onto a substrate by any of the known means such as Guardco® wet film applicator rods, knife, bar, air spraying, airless spraying, dipping, roller coating, flowing, brushing, conventional and/or electrostatic spray gun, electrodeposition, and the like. The various substrates employed can be wood, paper, metal, pretreated metal, plastic and the like. Generally, the coating composition is applied in an amount sufficient to provide a tack free cured film thickness of from about 0.05 mil to about 5 mil, preferably from about 0.1 mil to about 3 mil. Optionally, multiple coats of the composition may be applied to the substrate. By selection of components and additives the compositions may be applied both as transparent coatings and/or opaque coatings.

The coating composition is then cured by radition, in particular photochemically. The light source preferably emits wavelengths in the ultraviolet spectrum from about 2,200 Å to about 14,000 Å. Optionally, the light source includes light having a substantial ultraviolet spectrum from about 2,200 Å to about 4,000 Å. The systems used to generate ultraviolet radiation for the radiation polymerization reaction can be any known in the art such as low pressure, medium pressure, high pressure, super high pressure, mercury lamps; mercury, carbon and plasma arc lamps; xenon lamps; UV light emitting diodes; UV emitting lasers and the like. The polymerizable coating compositions can also be cured using an electron beam apparatus.

The coating compositions are unexpectedly cured by radiation at ambient temperature.

After radiation curing, there is present on the surface of the substrate a tack free, hard, mar, adhesive and chemically resistant coating.

The coating composition is compromised of the radiation reaction products of the polymer, the reactive diluent and the photointiator. The enhanced solubility of the nitrile acrylate polymer allows for increased matrix formation of the reactive diluent with the polymer thus strengthening the matrix. Unlike conventional radiation curing systems which have unsaturation, in particular unsaturated nitrile groups, to provide crosslink sites in the matrix, the coating composition of the instant invention has additional sites for matrix formation such as saturated sites and hydrogen abstraction.

The radiation cure initiates the formation of a matrix between polymer, reactive diluent and photoinitiator at saturation sites. Further, hydrogen abstraction from the carbon backbone of the polymer may also occur for crosslinking which strengthens the matrix. Radiation induced polymerization occurs between the polymer-polymer, polymer-reactive diluent and reactive diluent - reactive diluent with the photoinitiators incorporated therein.

The coatings' superior properties are derived not only from the ability of the polymer matrix to crosslink and graft but also from the inherent barrier properties of the nitrile functionality.

A general discussion as to how coatings function is available in, Kirk-Othmer Encyclopedia of Chemical Technology, Vol 7, p. 113, "Corrosion and Corrosion Inhibitors", John Wiley and Sons, Inc., 1979, and L. Blecher, D.H. Lorenz, H.L. Lowd, A.S. Wood and D.P. Wyman, "Handbook of Water-Soluble Gums and Resins", R.L. Davidson, ed., McGraw Hill, N.Y. 1980.

The nitrile acrylate coating compositions of the present invention exhibit excellent curability by radiation, in particular photoradiation, long term storage stability, good adhesive and cohesive bonding properties and applicability in many environments after the curing step. Further, the nitrile acrylate coatings have excellent corrosion resistance, hardness and adhesion.

## Specific Embodiments

The following examples demonstrate the process and advantages of the present invention.

## Test Method

The following photocurable compositions A-Q were prepared by dissolving the nitrile acrylate polymer in the reactive diluent by stirring. To this solution, in the dark, was added the photoinitiator system. The resulting mixture was stirred to form a homogeneous composition.

The coating compositions A-Q were applied to the surface of phosphate pretreated steel 10 × 15 cm test panels using Gardco® (available from Paul N. Gardener, Lauderdale-By-the-Sea, Florida) wet film application rods. The coated panels were then exposed to ultraviolet light at room temperature until a tack free coating resulted. The thickness of the coated panel A-Q ranged from 0.1 to 3.0 mil.

In each case, ASTM standard adhesion (tape test) and hardness (pencil) tests were carried out on the coated metal substrate.

The adhesion tape test (ASTM D 3359-78) was carried out by applying a strip of Scotch Brand No. 670 tape (available from 3M, Minnesota) to a cross-cut section previously made by a sharp tool in the coated substrate. The tape was then removed. The percent adhesion, of coating remaining on the substrate, was assessed on a 0-100 scale with no adhesion being 0 and 100 percent adhesion being no loss of coating. The results of the adhesion tape test are shown in Table I.

The hardness test measures the rigidity of the organic coating applied to rigid substrates such a metal panels. The hardness test, (ASTM D 3363-74) was carrried out by forcing pencil leads of increasing hardness values against the coated surface in a precisely defined manner, until one lead mars the surface. Surface hardness is defined by the hardest pencil lead which just fails to mar the coated surface. Test ranges are 6B to 8H with 8H being excellent, that is, the hardest lead failed to mar the coating. The results of the hardness test are shown in Table I.

Identical duplicate panels for coating compositions A-Q were prepared as above and subjected to salt fog exposure.

The salt fog (ASTM B 117) test measures the corrosion resistance of the coating composition. Salt fog testing was carried out by masking with black tape uncoated portions of the panel. A large X is scribed on the coated portion of the panel. The panel is placed in the salt fog cabinet for a given period of time. The cabinet induces accelerated corrosion testing through exposure of the specimens to a salt-fog atmosphere. A rating is given based on the degree of rusting and the length of time the samples have been exposed to the salt-fog atmosphere. Test ranges are 0 to 10, with a 0 rating for all rust and a 10 rating for no appreciable rust. Furthermore, the scale is logarthmic between the two extreme endpoints. The results of the salt fog testing are shown in Table 1.

Coating Compositions of the Specific Examples

Polymer A - 30 Acrylonitrile/70 Ethylacrylate. In a 500 ml three-neck round bottom equipped with mechanical stirrer, reflux condenser and temperature probe was placed about 30 pphm acrylonitrile, about 70 pphm ethyl acrylate, about 300 pphm distilled water and about 0.5 pphm polyvinylpyrrolidone (hereinafter, PVP-K-90, available from Fischer Scientific Inc., Cleveland, Ohio). The mixture was degassed with argon while stirring and heating to about 60 degrees C. In a separate flask the initiator solution of about 0.2 pphm t-butoxypivalate in about 25 ml methanol was degassed with argon. At one hour intervals from $t_0$ to t = 6 hours, about a 5 ml aliquot of initiator solution and about 0.24 ml of n-octyl mercaptan, were added. After about six hours, the reaction was cooled to room temperature, approximately 0.2 pphm hydroquinone was added to quench the reaction and the acrylonitrile-ethyl acrylate copolymer precipitate (Polymer A) was isolated.

| Composition A | Percent |
|---|---|
| Polymer A | 24.5 |
| N-vinyl pyrrolidone | 73.5 |
| Benzophenone | 0.98 |
| Ethyldiethanolamine | 0.98 |

| Composition B | Percent |
|---|---|
| Polymer A | 24.5 |
| gamma-Butyrolactone | 73.5 |
| Benzophenone | 0.98 |
| Ethyldiethanolamine | 0.98 |

Polymer B - 50 Acrylonitrile/50 Ethylacrylate. In a 1 liter three neck round bottom equipped with mechanical stirrer, reflux condenser and temperature probe was placed about 50 pphm acrylonitrile, about 50 pphm ethyl acrylate, about 300 pphm distilled water and about 0.5 pphm PVP-K-90. The mixture was degassed with argon while stirring and heating to about 60 degrees C. In a separate flask the initiator solution of about 0.2 pphm t-butoxypivalate in about 25 ml methanol was degassed with argon. At one hour

intervals from $t_0$, about 5 ml aliquot of initiator solution and about 0.7 ml of n-octyl mercaptan, were added. After about six hours, the reaction was cooled to room temperature, approximately 0.2 pphm hydroquinone was added to quench the reaction and the acrylonitrile-ethyl acrylate copolymer precipitate (Polymer B) was isolated.

| Composition C | Percent |
|---|---|
| Polymer B | 24.5 |
| N-vinyl pyrrolidone | 73.5 |
| Benzophenone | 0.98 |
| Ethyldiethanolamine | 0.98 |

| Composition D | Percent |
|---|---|
| Polymer B | 38.8 |
| N-vinyl pyrrolidone | 58.1 |
| Benzophenone | 1.5 |
| Ethyldiethanolamine | 1.5 |

| Composition E | Percent |
|---|---|
| Polymer B | 24.5 |
| gamma-Butyrolactone | 58.1 |
| Benzophenone | 1.5 |

| Composition F | Percent |
|---|---|
| Polymer B | 38.8 |
| gamma-Butyrolactone | 58.1 |
| Benzophenone | 1.5 |
| Ethyldiethanolamine | 1.5 |

Polymer C - 70 Acrylonitrile/30 Ethyl acrylate.In a 1 liter three-neck round bottom equipped with mechanical stirrer, reflux condenser and temperature probe was placed about 70 pphm acrylonitrile, about 30 pphm ethyl acrylate, about 300 pphm distilled water and about 0.5 pphm PVP-K-90. The mixture was degassed with argon while stirring and heating to about 60 degrees C. In a separate flask the initiator solution of about 0.2 pphm t-butoxypivalate in about 25 ml methanol was degassed with argon. At on hour intervals from $t_0$, about 5 ml aliquot of initiator solution and about 0.2 ml of t-dodecyl mercaptan were added. After about six hours, the reaction was cooled to room temperature, approximately 0.2 pphm hydroquinone was added to quench the reaction and the acrylonitrile-ethyl acrylate copolymer precipitate (Polymer C) was isolated.

| Composition G | Percent |
|---|---|
| Polymer C | 24.5 |
| N-vinyl pyrrolidone | 73.5 |
| Benzophenone | 0.98 |
| Ethyldiethanolamine | 0.98 |

| Composition H | Percent |
|---|---|
| Polymer C | 32.5 |
| N-vinyl pyrrolidone | 64.9 |
| Benzophenone | 1.3 |
| Ethyldiethanolamine | 1.3 |

| Composition I | Percent |
|---|---|
| Polymer C | 24.5 |
| gamma-butyrolactone | 73.5 |
| Benzophenone | 0.98 |
| Ethyldiethanolamine | 0.98 |

| Composition J | Percent |
|---|---|
| Polymer C | 32.5 |
| gamma-Butyrolactone | 64.9 |
| Benzophenone | 1.3 |
| Ethyldiethanolamine | 1.3 |

Polymer D - 70 Acrylonitrile/30 Ethylacrylate. - In a 500 ml three-neck round bottom equipped with mechanical stirrer, reflux condenser and temperature probe was placed about 70 pphm acrylonitrile, about 30 pphm ethyl acrylate, about 300 pphm distilled water and about 0.5 pphm PVP-K-90. The mixture was degassed with argon while stirring and heating to about 60 degrees C. In a separate flask the initiator solution of about 0.2 pphm t-butoxypivalate in about 25 ml methanol was degassed with argon. At one hour intervals from $t_o$, about 5 ml aliquot of initiator solution and about 0.7 ml of n-octyl mercaptan, were added. After about six hours, the reaction was cooled to room temperature, approximately 0.2 pphm hydroquinone was added to quench the reaction and the acrylonitrile-ethyl acrylate copolymer precipitate (polymer D) was isolated.

| Composition K | Percent |
|---|---|
| Polymer D | 24.5 |
| N-vinyl pyrrolidone | 73.5 |
| Benzophenone | 0.98 |
| Ethyldiethanolamine | 0.98 |

| Composition L | Percent |
|---|---|
| Polymer D | 38.8 |
| N-vinyl pyrrolidone | 58.1 |
| Benzophenone | 1.5 |
| Ethyldiethanolamine | 1.5 |

| Composition M | Percent |
|---|---|
| Polymer D | 24.5 |
| gamma-Butyrolactone | 73.5 |
| Benzophenone | 0.98 |
| Ethyldiethanolamine | 0.98 |

| Composition N | Percent |
|---|---|
| Polymer D | 38.8 |
| gamma-Butyrolactone | 58.1 |
| Benzophenone | 1.5 |
| Ethyldiethanolamine | 1.5 |

Polymer E - 70 Acrylonitrile/30 Ethylacrylate. In a 500 ml three-neck round bottom equipped with mechanical stirrer, reflux condenser and temperature probe was placed about 70 pphm acrylonitrile, about 30 pphm ethyl acrylate, about 300 pphm distilled water, about 0.2 pphm t-butoxypivalate, about 3.0 pphm t-dodecyl mercaptan and about 0.5 pphm PVP-K-90. The mixture was degassed with argon while stirring and heating to about 60 degrees C. After about six hours, the reaction was cooled to room temperature, approximately 0.2 pphm hydroquinone was added to quench the reaction and the acrylonitrile-ethyl acrylate copolymer precipitate (Polymer E) was isolated.

| Composition O | Percent |
|---|---|
| Polymer E | 32.5 |
| gamma-butyrolactone | 64.9 |
| Benzophenone | 1.3 |
| Ethyldiethanolamine | 1.3 |

| Composition P | Percent |
|---|---|
| Polymer E | 24.5 |
| gamma-butyrolactone | 73.5 |
| Benzophenone | 0.98 |
| Ethyldiethanolamine | 0.98 |

| Composition Q | Percent |
|---|---|
| Polymer E | 24.5 |
| gamma-butyrolactone | 55.1 |
| DEGDA | 18.3 |
| Benzophenone | 0.98 |
| Ethyldiethanolamine | 0.98 |

## Results

The results of the coating compositions demonstrates 100 percent adhesion and 8H hardness. These results demonstrate that the coating compositions of the instant inventions show excellent adhesion and hardness.

The results of the salt fog testing demonstrate that the photocurable coating composition in accordance with this invention renders protection from corrosion from 24 hours to 600 hours. The corrosion resistance is enhanced when the weight percent of the nitrile monomer is increased in the polymer. These results exemplify very good corrosion resistance of the coatings of the instant invention.

The coating compositions of the instant invention can be employed for various uses where all the properties are not required for good coating compositions, for example a good corrosion resistant coating may not be needed in an environment requiring good adhesion.

Although the invention has been described in detail through the preceeding examples, these examples are for the purpose of illustration only, and it is understood that variations and modifications can be made by one skilled in the art without departing from the spirit and the scope of the invention.

TABLE I

| Compositions | Hardness | Adhesion | Rust Rating | Hours of (Exposure) |
|---|---|---|---|---|
| A | 100% | 8H | 0 | 24 hrs. |
| B | 100% | 8H | 0 | 24 hrs. |
| C | 100% | 8H | 3 | 24 hrs. |
| D | 100% | 8H | 2 | 96 hrs. |
| E | 100% | 8H | 5 | 24 hrs. |
| F | 100% | 8H | 5 | 162 hrs. |
| G | 100% | 8H | 6 | 24 hrs. |
| H | 100% | 8H | 7 | 600 hrs. |
| I | 100% | 8H | 6 | 24 hrs. |
| J | 100% | 8H | 9 | 600 hrs. |
| K | 100% | 8H | 2 | 24 hrs. |
| L | 100% | 8H | 5 | 500 hrs. |
| M | 100% | 8H | 0 | 24 hrs. |
| N | 100% | 8H | 6 | 329 hrs. |
| O | 100% | 8H | 7 | 600 hrs. |
| P | 100% | 8H | 2 | 24 hrs. |
| Q | 100% | 8H | 4 | 384 hrs. |

**Claims**

1. A process for preparing a 100% solids radiation cured coating comprising;

1) forming a mixture of coating composition comprising a polymer comprising, a nitrile monomer and an acrylate monomer, a reactive diluent and a photoinitiator;

2) applying the mixture of the coating composition to a substrate and

3) curing the coating by radiation to form a cured tack free coating which coating is corrosion resistant and adhesive.

2. A process as claimed in claim 1 characterised in that the coating composition is 100 percent solids solvent free composition.

3. A process as claimed in claim 1 or claim 2, characterised in that the coating composition contains from 5 to 60 weight percent, preferably 15 to 50 weight percent, in particular 25 to 40 weight percent, of the nitrile acrylate polymer.

4. A process as claimed in any of claims 1 to 3 characterised in that the nitrile monomer is from 30 to 99 weight percent preferably 45 to 90 weight percent, in particular 60 to 80 weight percent of the nitrile acrylate polymer composition.

5. A process as claimed in any of claims 1 to 4 characterised in that the acrylate monomer is from 1 to 70 weight percent, preferably 10 to 55 weight percent, in in particular 20 to 40 weight percent of the nitrile acrylate polymer composition.

6. A process as claimed in any of claims 1 to 5 characterised in that nitrile monomer is selected from acrylonitrile alphachloroacrylonitrile, alpha-fluoroacrylonitrile, methacrylonitrile, ethacrylonitrile and combinations thereof.

7. A process as claimed in any of claims 1 to 6 characterised in that the acrylate monomer is selected from esters of olefinically unsaturated carboxylic acids, vinyl esters, vinyl ethers, vinyl ketones, alpha-olefins, vinyl aromatic monomers and combinations thereof.

8. A process as claimed in any of claims 1 to 7 characterised in that the coating composition contains from 95 to 40 weight percent preferably 85 to 50 weight percent, in particular 70 to 60 weight percent of the reactive diluent.

9. A process as claimed in any of claims 1 to 8 characterised in that the reactive diluent is selected from acrylates, olefinacally unsaturated carboxylic acids and their anhydrides, vinyl ester, vinyl halides, vinyl cyanides, vinyl amides, vinyl amines, olefins and combinations thereof.

10. A process as claimed in any of claims 1 to 9 characterised in that the coating composition contains from 0.01 percent to 10 percent by weight, preferably 0.1 to 5 percent by weight, in particular 0.5 to 2 percent by weight of the photoinitiator.

11. A process as claimed in any of claims 1 to 10 characterised in that the photoinitiators are selected from acetophenone derivatives, anthraquinone derivatives, dibenzyl ketones, benzophenone derivatives, benzoin alkyl ethers and combinations thereof.

12. A process as claimed in any of claims 1 to 10 characterised in that the photoinitiators are selected from benzophenone, benzil, benzoin ethyl ether, azobisisobutyronitrile and combinations thereof.

13. A process as claimed in any of claims 1 to 12 characterised in that the radiation comprises wave lengths from 2,200 Angstoms to 14,000 Angstroms, preferably from 2,200 Angstoms to 4,000 Angstroms.

14. A process as claimed in any of claims 1 to 13 characterised in that the coating composition is cured photochemically at ambient temperature to a tack free coating.

15. A process as claimed in any of claims 1 to 14 characterised in tht the coating composition is applied in a single coat at a thickness of from .05 mils to 5 mils thick.